# EUROPÄISCHE PATENTSCHRIFT

(11) **EP 1 967 252 B1**
(45) Veröffentlichungstag und Bekanntmachung des Hinweises auf die Patenterteilung: **27.05.2015**
(21) Anmeldenummer: 08003964.7
(22) Anmeldetag: 04.03.2008
(51) Int. Cl.: B01D 53/34, B01D 53/78, F23J 15/04, F28D 21/00

(54) **Anlage zur Rückgewinnung von Wärmeenergie und Reinigung von Rauchgasen aus feuerungstechnischen Anlagen**
Facility for recovery of heat energy and purifying flue gases from furnace facilities
Installation de récupération d'énergie thermique et de nettoyage de gaz de fumée provenant d'installations de chauffe

(30) Priorität: 09.03.2007 DE 102007011640
(43) Veröffentlichungstag der Anmeldung: 10.09.2008
(73) Patentinhaber: Esterka, Elke, Okr. Hodonin (CZ)
(72) Erfinder: Martin, Werner, 08115 Lichtentanne (DE)
(74) Vertreter: Helge, Reiner

(56) Entgegenhaltungen:
- EP-A- 0 227 568
- DE-A1- 10 107 086
- DE-A1- 19 539 858
- DE-A1- 19 723 407
- DE-A1- 19 812 310
- DE-B1- 2 803 091
- DE-C- 415 586

## Beschreibung

Die Erfindung betrifft eine Anlage zur Rückgewinnung von Wärmeenergie aus Rauchgasen in Kombination mit der Reinigung dieser Rauchgase von feuerungstechnischen Anlagen insbesondere für den Einsatz in Bäckereien, wobei diese Anlage in die Abgasführung zwischen Rauchgas- und Schwadenabgang eines Backofens und dem diese Gase ins Freie führenden Schornstein eingeordnet wird.

Allgemein ist es bekannt, daß bei derartigen feuerungstechnischen Anlagen der Energiebedarf durch Wärmerückgewinnung erheblich reduziert werden kann. Bekannte Backöfen, die unter Verwendung von Wärmetauschern mit der Rückgewinnung von Abwärmeenergie arbeiten, weisen jedoch die Problematik auf, daß nach dem Durchströmen der Wärmetauscher-Phase das Rauchgas oftmals extrem abgekühlt ist, so daß ein hoher Anteil an Kondensat vorhanden ist und die Kaminanlage nicht mehr den erforderlichen Abzug der Rauchgase aufbringen kann.

Mit der DE 198 10 758 C1 wird eine Vorrichtung zur Rauchgasreinigung für feuerungstechnische Anlagen mit Einrichtungen zur Abgaskühlung und nachfolgender Rauchgaswäsche sowie einem im Abluftkanal angeordneten Abluftventilator, wobei die Rauchgase zum Zweck der Reinigung eine drehbare Trommel mit einer hohlen Drehachse durchströmen, die mit einem Granulat befüllt und von einem Waschfluid beaufschlagt wird, indem die hohle Drehachse mit radialen Öffnungen versehen ist und indem das Waschfluid über die radialen Öffnungen in die Trommel eingeführt wird, offenbart.

In der Veröffentlichung DE 297 09 786 U1 wird eine Einrichtung zur Rauchgasreinigung und Energierückgewinnung an mit Gas- oder Ölbrennern betriebenen Anlagen, wie zum Beispiel Backöfen oder Heizungsanlagen wiedergegeben, bei der die wärmetauschende Einrichtung aus einem oder mehreren wasserbefüllten Zylindern besteht, wobei im Inneren dieser Zylinder die von den Rauchgasen durchströmten Rohre und unterhalb dieser Zylinder der in eine oder mehreren Kassetten unterteilte drehbar gelagerte Rauchgaswäscher angeordnet ist und in den einzelnen Kassetten des Rauchgaswäschers horizontal oder vertikal Schnecken oder Spiralen zur Granulatumwälzung angeordnet sind.

Aus der DE 23 03 657 ist ein Apparat zum Zustandebringen einer Berührung zwischen einer Flüssigkeit und einem Gas, wie zum Beispiel einem Filterelement zur mikrobiologischen Reinigung von Wasser oder zur Reinigung von Rauchgasen bekannt. Dieser Apparat besteht aus einem mit Füllkörpern gepackten zylindrischen Behälter, der auf einer horizontalen Achse drehbar angeordnet ist und bei dem wenigstens der Zylindermantel durchbrochen ist, so daß die Flüssigkeit und das Gas durch den Mantel fließen können. Der Apparat hat innerhalb und/oder außerhalb des Zylindermantels angebrachte Glieder, die, wenn der Zylinder in einer Flüssigkeit eintauchend umläuft, die Flüssigkeit über die Flüssigkeitsoberfläche hochhebt und sie beim fortgesetzten Umlauf des Zylinders über die Füllkörper gießt. Dabei weist die Hohlwelle des Zylinders innerhalb des Zylinders eine Anzahl von Löchern auf, durch die Luft eingeblasen werden kann.

Der Nachteil dieser Einrichtung besteht darin, daß die Packung der Füllkörper im Zylinder nicht gleichmäßig mit dem Fluid beaufschlagt wird.

Die Aufgabe der Erfindung besteht darin, eine Anlage zur Rauchgasreinigung und Wärmerückgewinnung für feuerungstechnische Anlagen, die als Beistellgerät zwischen wenigstens dem Rauchgasabgang der Verbrennungsstelle und dem diese Gase ins Freie führenden Schornstein einsetzbar ist, zu schaffen, mit der die vorgenannten Nachteile beseitigt werden.

Durch die Ausführung als eine beistellbare Anlage, die direkt mit dem Rauchgasabzug der feuerungstechnischen Anlage verbunden ist, kann auf aufwendige Kaminsysteme bzw. auf Kaminsanierungen verzichtet werden, da das Abgas nach Durchströmen der Anlage mit einem hohen Reinigungsgrad direkt ins Freie geleitet werden kann.

Erfindungsgemäß wird diese Aufgabe dadurch gelöst, daß die Anlage aus mindestens zwei von einander getrennt angeordneten Wärmetauschereinheiten und einem Reinigungsbereich sowie einem Neutralisationsbereich gebildet wird, wobei die Wärmetauschereinheit einen Wärmetauscher für den Schwaden und die andere Wärmetauschereinheit einen Wärmetauscher für das Rauchgas aufweist, deren untere Ausgänge in den Reinigungsbereich münden. Dieser Reinigungsbereich wird von einer Bodenwanne gebildet, welche mit einer Flüssigkeit gefüllt ist, wobei in dieser Bodenwanne mindestens ein Scheibenwäscher angeordnet ist.

Der Neutralisationsbereich besteht aus einer über der Bodenwanne angeordneten Abteilung mit dem Neutralisationsraum und dem Absaugraum.

Der wesentliche Vorteil der Erfindung besteht darin, daß zum einen das von der Verbrennungsstelle kommende Rauchgas und zum anderen der vor allem in Backöfen beim Backen entstehende bzw. über das Backgut geleitete Schwaden gleichzeitig aber auch getrennt von einander durch die Wärmetauschereinheiten geführt werden, wodurch der Kondensationsprozeß des Schwadens nicht durch das höhere Temperaturniveau des Rauchgases beeinflußt wird.

Desweiteren wird im Gegensatz zu einer gemeinsamen Rauchgas- und Schwadenführung das Temperaturniveau des Rauchgases nicht durch das niedrigere Temperaturniveau des Schwadens beeinflußt, so daß eine wesentlich höhere Wärmeenergie-Rückgewinnung über die einzelnen Wärmetauscher möglich ist.

In vorteilhafter Weise wird mit dem Einspritzen von Harnstoff über eine im oberen Bereich der Wärmetauschereinheit des Rauchgases bzw. im zur Wärmetauschereinheit führenden Abgaskanal vorgesehene Einrichtung das im heißen Rauchgas vorhandene NOₓ gebunden.

Mit dem Einbringen von einer bestimmten Flüssigkeitsmenge im oberen Bereich der Wärmetauschereinheit erfolgt eine erste Befeuchtung der im Rauchgas enthaltenen Feststoffe, wodurch eine wesentlich verbesserte Abscheidung dieser über den Scheibenwäscher ermöglicht wird.

Von Vorteil ist es weiterhin, daß eine Einrichtung für den Übergang der ankommenden laminaren Schwaden- und/oder Rauchgasströmung in eine turbulente Strömung vorgesehen ist, weil durch diese strömungstechnische Umwandlung ein wesentlich besserer Wärmeübergangsprozeß des Gasstromes im Wärmetauscher ermöglicht wird.

Vorteilhafte Weiterbildungen und Ausgestaltungen der Erfindung sind aus den übrigen Unteransprüchen und aus dem nachfolgend anhand der Zeichnungen prinzipmäßig beschriebenen Ausführungsbeispiel ersichtlich.

Es zeigen
- Figur 1:: eine Prinzipdarstellung der Anlage
- Figur 2:: eine Schnittdarstellung A - A des Scheibenwäschers
- Figur 3:: eine Schnittdarstellung B - B des Absaugbereiches

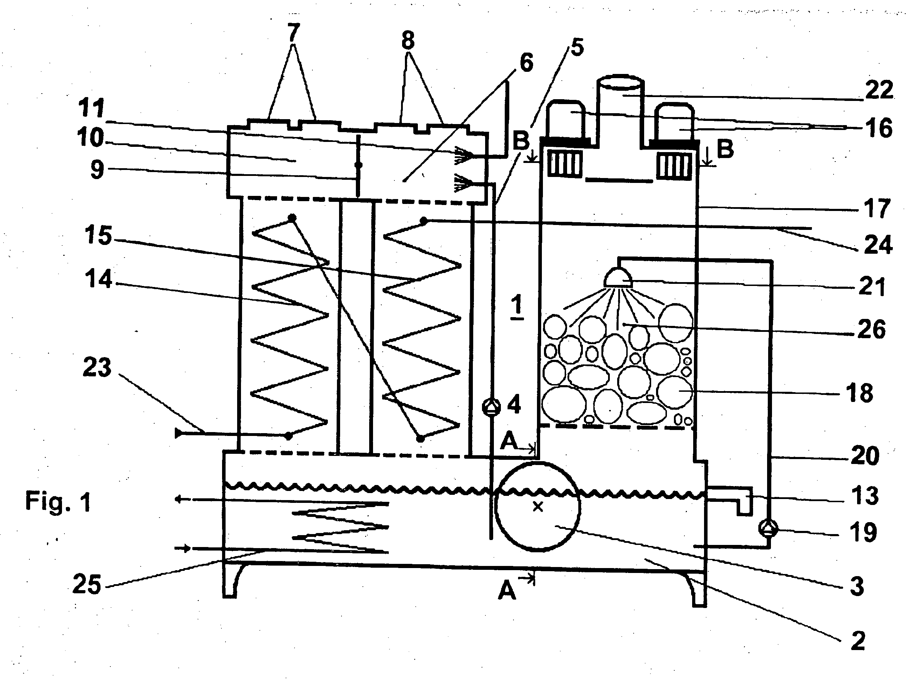

Die **Figur 1** zeigt in einer Prinzipdarstellung eine Anlage 1 zur Rückgewinnung von Wärmeenergie aus Rauchgasen in Kombination mit der Reinigung dieser Rauchgase von feuerungstechnischen Anlagen, insbesondere für den Einsatz in Bäckereien, wobei die bei Backöfen auftretenden Abgase, zum einen das beim Heizen auf die erforderliche Backtemperatur entstehende Rauchgas, oftmals mit teils giftigen und umweltunverträglichen Bestandteilen versehen, und zum anderen der den Backprozeß bzw. das Backgut beeinflussende Schwaden, getrennt von einander abgeführt werden, denn es ist äußerst ungünstig, wenn der Schwaden zusammen mit dem Rauchgas gemeinsam über einen Schornsteinzug abgezogen wird, weil das Rauchgas ein wesentlich höheres Temperaturniveau aufweist und somit der Schwaden so gut wie nicht kondensieren kann.

Die Anlage 1 ist als Zusatzbaugruppe in die Abgasführung zwischen Rauchgas-und/oder Schwadenabgang eines Backofens und dem diese Gase ins Freie führenden Schornstein angeordnet und wird aus mindestens zwei von einander getrennt angeordneten Wärmetauschereinheiten 10 und 6, und einem Reinigungsbereich sowie einem Neutralisationsbereich gebildet.

Die Wärmetauschereinheit 10 weist einen Wärmetauscher 14 für den Schwaden und die Wärmetauschereinheit 6 einen Wärmetauscher 15 für das Rauchgas auf.

Sollte in einem Ausnahmefall das Temperaturniveau des ankommenden Rauchgases über einem vorgegebenen Niveau liegen, wird über eine vorgesehene Steuereinheit die Klappe 9 geöffnet, so daß der Abkühl- bzw. Wärmetauschprozeß auch gleichzeitig mit über die Wärmetauschereinheit 10 des Schwadens geführt werden kann.

Mittels einem gut Wärme aufnehmenden Medium, welches über die Zuleitung 23 durch die in Reihe geschalteten Wärmetauscher 14 und 15 und dann über die Ableitung 24 geführt wird, wird das Temperaturniveau der ankommenden Abgase auf ein wesentlich tieferes Niveau herabgesetzt.

Die abgeführte Wärmemenge kann für andere wärmetechnische Prozesse eingesetzt werden.

Im oberen Bereich der Wärmetauschereinheit 6 des Rauchgases ist eine Einrichtung 11 mit einer Zuleitung angeordnet, über welche Harnstoff eingespritzt wird, wodurch das im heißen Rauchgas vorhandene NOₓ gebunden werden kann.

Mindestens innerhalb der Wärmetauschereinheit Rauchgas 6 sind Einrichtungen angeordnet (zeichnerisch nicht dargestellt), die dafür sorgen, daß die ankommende laminare Rauchgasströmung in eine turbulente Strömung übergeht. Als derartige Einrichtungen können beispielsweise eingehängte Ketten aus Eisen zum Einsatz kommen.

Die unteren Ausgänge der Gasstromführung münden in den Reinigungsbereich. Dieser wird von einer mit Flüssigkeit gefüllten Bodenwanne 2 gebildet. In dieser Bodenwanne 2 ist mindestens eine Waschvorrichtung in Form eines Scheibenwäschers 3 angeordnet. Zusätzlich ist in der Bodenwanne 2 ein weiterer Wärmetauscher 25 vorgesehen, mit dem zusätzlich noch vorhandene Wärmeenergie abgeführt werden kann.

Aus der Bodenwanne 2 wird ein Teil der Flüssigkeit mittels einer Pumpe 4 über die Leitung 5 nach oben gepumpt und in den Bereich der Wärmetauschereinheit 6 des Rauchgases eingesprüht. Somit wird der Rauchgasstrom einem Waschprozeß unterzogen, das heißt die in diesem Rauchgasstrom enthaltenen Feststoff-Bestandteile, wie beispielsweise Rußpartikel, werden von den eingespritzten Flüssigkeitströpfchen befeuchtet und so zu mindest teilweise aus dem Gasstrom ausgeschieden. Zum anderen dient dies dazu, Ablagerungen an den Wärmetauscherflächen abzuwaschen.

Die Scheiben 12 des Scheibenwäschers 3 sind sehr dünnwandig ausgeführt und weisen sehr geringe Abstände zu einander auf. Beim Bewegen des Läufers des Scheibenwäschers 3 kommt es neben der Drehbewegung zu einem "Flattern" der Scheiben 12, wodurch im Rauchgas vorhandene Feststoffe abgeschieden werden. Da die Scheiben 12 beim Fortsetzen der Drehbewegung wieder in das Flüssigkeitsbad eintauchen, werden die anhaftenden Feststoffbestandteile von den Scheiben 12 wieder abgewaschen.

Weiterhin weist die Bodenwanne 2 einen Überlaufes 13 auf, mittels dem der Pegelstand der Flüssigkeit in der Bodenwanne 2 konstant gehalten wird, denn es wird ein Teil der Flüssigkeit, beispielsweise als Frischwasser, zugeführt. Die über den Überlauf 13 abfließende Flüssigkeit kann nach entsprechender Aufbereitung (Filtrieren und - soweit erforderlich - Neutralisieren) dem Rauchgas-Reinigungsprozeß wieder zugeführt werden.

Das nunmehr von Feststoffen gereinigte und über die Wärmetauscher 14 und 15 abgekühlte Schwaden-Rauchgas-Gemisch wird im weiterführenden Prozeßablauf durch einen folgenden Neutralisationsbereich geführt. Dieser Neutralisationsbereich wird von einer über der Bodenwanne 2 angeordneten Abteilung gebildet, welche sich aus dem Neutralisationsraum 26 und dem Absaugraum 17 zusammensetzt.

Dieser Neutralisationsraum 26 ist mit einem Kalksteingranulat 18 beschickt, wodurch eventuell noch in dem Schwaden-Rauchgas-Gemisch vorhandene Giftstoffe neutralisiert bzw. ausgeschieden werden können.

Dieses Kalksteingranulat 18 wird, um seine Wirksamkeit voll zu entfalten, mit Flüssigkeit beaufschlagt. Hierfür ist eine Pumpe 19 vorgesehen, mittels welcher Flüssigkeit aus der Bodenwanne 2 über eine Leitung 20 in den Neutralisationsraum 26 gefördert wird, wo es über einen Sprühkopf 21 auf das Kalksteingranulat 18 verteilt wird.

Aufgrund dessen, daß sich in dem Schwaden-Rauchgas-Gemisch-Strom die anlagentechnischen Baugruppen, mindestens der/die Wärmetauscher 14 und 15, der Scheibenwäscher 3 und der Neutralisationsraum 26 mit dem Kalksteingranulat 18 befinden, wird zwangsläufig die Strömungsgeschwindigkeit sehr stark vermindert, so daß in dem Absaugraum 17 mittels mindestens einem Ventilator 16 ein entsprechend starker Zug erzeugt und so das gereinigte und abgekühlte Schwaden-Rauchgas-Gemisch über den Abzug 22 in den Kamin geführt wird.

Von Vorteil ist es jedoch, wenn zwei Ventilatoren 16 zum Einsatz kommen, damit der Zug, mit dem das abzuführende Schwaden-Rauchgas-Gemisch abgesaugt wird, weitestgehend konstant gehalten werden kann. Mittels einer vorgesehenen Steuerungseinrichtung werden diese beiden Ventilatoren 16 so betrieben, daß diese im Normalfall nicht mit Vollast arbeiten müssen. Es ist jedoch so gewährleistet, daß, wenn einer der Ventilatoren 16 ausfallen sollte, die Leistung des noch arbeitenden Ventilators 16 über die Steuerung so gesteigert wird, daß trotzdem noch eine ausreichende Abführung des Schwaden-Rauchgas-Gemisches erfolgen kann.

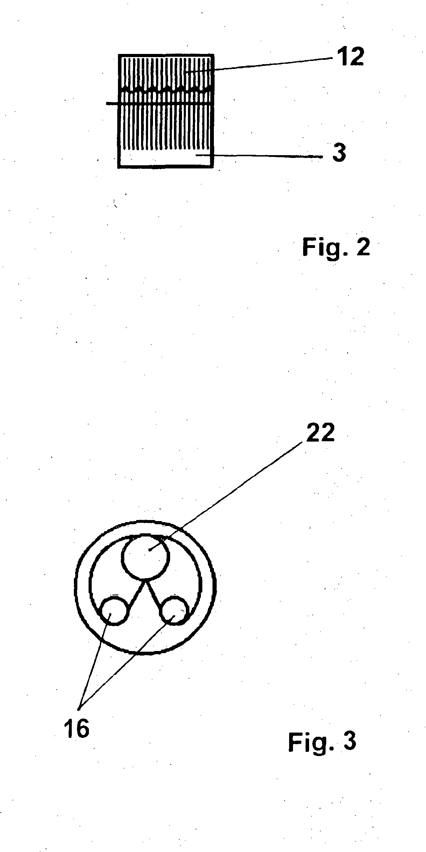

Die **Figur 2** zeigt in einer Schnittdarstellung A - A den Querschnitt eines Scheibenwäschers 3.

Die Scheiben 12 des Scheibenwäschers 3 sind hier lammellenartig und geradlinig ausgebildet dargestellt. In vorteilhafter Weise können die Scheiben 12 in mindestens teilweiser faltenartiger Weise ausgebildet sein.

Die **Figur 3** zeigt in einer Schnittdarstellung B - B den Absaugraum 17.

### Bezugszeichenliste

- 1 -: Anlage zur Rückgewinnung von Wärmeenergie und Reinigung von Rauchgase aus feuerungstechnischen Anlagen
- 2 -: Bodenwanne
- 3 -: Scheibenwäscher
- 4 -: Pumpe
- 5 -: Leitung
- 6 -: Wärmetauschereinheit Rauchgas
- 7 -: Schwadenanschluß
- 8 -: Rauchgasanschluß
- 9 -: Klappe
- 10 -: Wärmetauschereinheit Schwaden
- 11 -: Zuleitung
- 12 -: Scheiben
- 13 -: Überlauf
- 14 -: Wärmetauscher
- 15 -: Wärmetauscher
- 16 -: Ventilator
- 17 -: Absaugraum
- 18 -: Kalksteingranulat
- 19 -: Pumpe
- 20 -: Leitung
- 21 -: Sprühkopf
- 22 -.: Rauchgasabzug
- 23 -: Zuleitung Wärmetauscher
- 24 -: Ableitung Wärmetauscher
- 25 -: Wärmetauscher
- 26 -: Neutralisationsraum

## Patentansprüche

1. Anlage zur Rückgewinnung von Wärmeenergie aus Rauchgasen von feuerungstechnischen Anlagen in Kombination mit der Reinigung dieser Rauchgase, insbesondere in Bäckereien, wobei diese Anlage in die Abgasführung zwischen Rauchgas- und Schwadenabgang eines Backofens und dem diese Gase ins Freie führenden Schornstein eingeordnet ist,
**dadurch gekennzeichnet, daß**
die Anlage (1) aus mindestens zwei von einander getrennt angeordneten Wärmetauschereinheiten (10 und 6), und einem Reinigungsbereich sowie einem Neutralisationsbereich gebildet wird, wobei die Wärmetauschereinheit (10) einen Wärmetauscher (14) für den Schwaden und die Wärmetauschereinheit (6) einen Wärmetauscher (15) für das Rauchgas, aufweist deren untere Ausgänge in den Reinigungsbereich münden, der von einer mit Flüssigkeit gefüllten Bodenwanne (2) gebildet wird, wobei in dieser Bodenwanne (2) mindestens ein Scheibenwäscher (3) angeordnet ist und der Neutralisationsbereich aus einer über der Bodenwanne (2) angeordneten Abteilung mit dem Neutralisationsraum (26) und dem Absaugraum (17) besteht.

2. Anlage nach Anspruch 1,
**dadurch gekennzeichnet, daß**
eine Einrichtung (11) in dem Rauchgaskanal (8) mündend angeordnet ist, über welche Harnstoff in den Rauchgasstrom einbringbar ist.

3. Anlage nach Anspruch 1 und 2,
**dadurch gekennzeichnet, daß**
in den Rauchgaskanal (8) eine Leitung (5) mündet, über welche mittels einer Pumpe (4) ein Teil der in der Bodenwanne (2) vorhandenen Flüssigkeit einbringbar ist.

4. Anlage nach Anspruch 1,
**dadurch gekennzeichnet, daß**
innerhalb der Wärmetauschereinheiten für den Schwaden (10) und/oder das Rauchgas (6) mindestens eine Einrichtung für den Übergang der ankommenden laminaren Schwaden- und/oder Rauchgasströmung in eine turbulent Strömung angeordnet ist.

5. Anlage nach Anspruch 1 bis 4,
**dadurch gekennzeichnet, daß**
der Wärmetauscher (14) für den Schwaden mit dem Wärmetauscher (15) für das Rauchgas in Reihe geschaltet ist und das die Wärme aufnehmende Medium in dieser Reihenfolge über die Zuleitung (23) die Wärmetauscher (14 und 15) zur Ableitung (24) hin durchströmt.

6. Anlage nach Anspruch 1 bis 5,
**dadurch gekennzeichnet, daß**
die zwei von einander getrennt angeordnete Wärmetauschereinheiten (10 und 6) mittels einer zwischen diesen Wärmetauschereinheiten (10 und 6) angeordneten Klappe (9) zu einer Einheit wandelbar sind.

7. Anlage nach Anspruch 1,
**dadurch gekennzeichnet, daß**
in der Bodenwanne (2) ein mindestens weiterer Wärmetauscher (25) angeordnet ist.

8. Anlage nach Anspruch 1 bis 7,
**dadurch gekennzeichnet, daß**
die Scheiben (12) des Scheibenwäschers (3) lammellenartig und dabei in geradliniger und/oder mindestens teilweiser faltenartiger Weise ausgebildet sind.

9. Anlage nach Anspruch 1 bis 7,
**dadurch gekennzeichnet, daß**
in dem Neutralisationsraum (26) Kalksteingranulat (18) eingebracht ist, wobei dieses mittels Flüssigkeit aus der Bodenwanne (2) mittels einer Pumpe (19) über eine Leitung (20) und eine Sprüh- oder Berieselungs-Einrichtung (21) und/oder zugeführtem Frischwasser auf einem vorgesehenen Feuchtigkeitsgrad gehalten wird.

10. Anlage nach Anspruch 1 bis 6,
**dadurch gekennzeichnet, daß**
über dem Neutralisationsbereich (26) Ventilatoren (16) für die Aufrechterhaltung eines erforderlichen, annähernd konstanten Absaugzuges in den Rauchgasabzug (22) angeordnet sind.

## Claims

1. Installation for the recovery of thermal energy from flue gas from combustion technology systems in combination with the cleaning of these flue gases, in particular in bakeries, wherein this installation is arranged into the exhaust gas path between the flue gas and the vapour exhaust of a baking oven, and the chimney which leads these gases to the outside,
**characterized in that**
the installation (1) is made up of a minimum of two heat exchanger units (10 and 6) separated from each other, and a cleaning area as well as a neutralisation area, wherein the heat exchanger unit (10) is equipped with a heat exchanger (14) for the vapour, and the heat exchanger unit (6) is equipped with a heat exchanger (15) flue gas, the lower outputs of which lead to the cleaning area which is made up of a base trough (2) filled with liquid, wherein at least one pane cleaner (3) is arranged in this base trough (2), and the neutralisation area consists of a compartment arranged above the base trough (2), which includes the neutralisation chamber (26) and the extraction room (17).

2. Installation according to claim 1,
**characterized in that**
a device (11) is arranged in a position leading to the flue gas channel (8) which allows to introduce urea into the flue gas flow.

3. Installation according to claim 1 and 2,
**characterized in that**
a pipe (5) leads to the flue gas channel (8), which allows to introduce a part of the liquid present in the base trough (2) by means of a pump (4).

4. Installation according to claim 1,
**characterized in that**
at least one device for the conversion of the ingoing laminar vapours and/or flue gas low to a turbulent flow is arranged within the heat exchanger units for the vapours (10) and/or the flue gas (6).

5. Installation according to claim 1 to 4,
**characterized in that**
the heat exchanger (14) for the vapours and the heat exchanger (15) for the flue gas are connected in series, and that the medium which takes up the heat flows through the heat exchangers (14 and 15) in this sequence, via the supply line (23) towards the outflow line (24).

6. Installation according to claim 1 to 5,
**characterized in that**
the two heat exchanger units (10 and 6) arranged separately from each other, can be converted to one unit, by means of a flap (9) arranged between there heat exchanger units (10 and 6).

7. Installation according to claim 1,
**characterized in that**
at least one more heat exchanger (25) is arranged in the base trough (2).

8. Installation according to claim 1 to 7,
**characterized in that**
the panes (12) of the pane cleaner (3) are arranged in lamella form, and for this in a straight way and/or at least in partially folded way.

9. Installation according to claim 1 to 7,
**characterized in that t**
limestone granulate (18) is introduced into the neutralisation chamber (26), wherein this is maintained at a certain degree of humidity, using the liquid from the base trough (2) by means of a pump (19) via a pipe (20) and a spraying or sprinkling system (21), and/or by means of supplied fresh water.

10. Installation according to claim 1 to 6,
**characterized in that**
fans (16) for maintaining a necessary, almost constant extraction flow, are arranged in the flue gas vent (22) above the neutralisation area (26).

## Revendications

1. Dispositif de récupération de la chaleur et de nettoyage des gaz de fumée produits par une installation de chauffage, destiné en particulier aux boulangeries dans lesquelles ce dispositif peut être placé au niveau du conduit d'échappement d'un four, entre l'évacuation des gaz de fumée et de la buée et la cheminée qui rejette ces gaz à l'air libre,
**caractérisé en cela que**
le dispositif (1) se compose d'au moins deux unités d'échange de chaleur séparées l'une de l'autre (10 et 6), d'un compartiment dédié au nettoyage et un autre à la neutralisation, l'unité d'échange de chaleur (10) étant munie d'un échangeur de chaleur (14) dédié à la buée et l'unité d'échange de chaleur (6) d'un échangeur de chaleur (15) dédié au gaz de fumée, dont les sorties inférieures débouchent dans le compartiment de nettoyage constitué d'un bac de fond rempli de liquide (2), bac de fond (2) dans lequel est disposé au moins un nettoyeur à disques (3), et le compartiment de neutralisation étant constitué d'une unité située au dessus du bac de fond (2) comportant une chambre de neutralisation (26) et une chambre d'aspiration (17).

2. Dispositif d'après la revendication 1,
**caractérisé en cela que**
un dispositif (11) débouchant dans le conduit des gaz de fumée (8) est intégré au dispositif de récupération, et permet d'injecter de la carbamide dans le flux de gaz de fumée.

3. Dispositif d'après les revendications 1 et 2,
**caractérisé en cela que**
un conduit (5) débouche dans le conduit des gaz de fumée (8), qui permet d'injecter une partie du liquide présent dans le bac de fond (2) au moyen d'une pompe (4).

4. Dispositif d'après la revendication 1,
**caractérisée en cela que**
au moins un dispositif destiné à faire entrer le flux laminaire de buée et/ou de gaz de fumée en turbulence est intégré à l'intérieur de l'unités d'échange de chaleur dédiée à la buée (10) et/ou aux gaz de fumée (6).

5. Dispositif d'après les revendications 1 à 4,
**caractérisé en cela que**
l'échangeur de chaleur (14) dédié à la buée est branché en série avec l'échangeur de chaleur (15) dédié aux gaz de fumée et que le liquide récupérateur de chaleur passe d'abord par le conduit d'alimentation (23), puis par l'échangeur de chaleur (14 et 15) en direction de l'évacuation (24).

6. Dispositif d'après les revendications 1 à 5,
**caractérisé en cela que**
les deux unités d'échange de chaleur séparées l'une de l'autre (10 et 6) peuvent être réunies au sein d'une seule et même unité à l'aide d'un clapet (9) disposé entre ces unités d'échange de chaleur (10 et 6).

7. Dispositif d'après la revendication 1,
**caractérisé en cela que**
au moins un échangeur de chaleur supplémentaire (25) est disposé dans le bac de fond (2).

8. Dispositif d'après les revendications 1 à 7,
**caractérisé en cela que**
les disques (12) du nettoyeur à disques (3) présentent une structure laminaire et sont donc disposés de manière rectiligne, et/ou au moins en partie sous forme plissée.

9. Dispositif d'après les revendications 1 à 7,
**caractérisé en cela que**
des granulés de chaux (18) sont ajoutés dans la chambre de neutralisation (26), qui sont maintenus à un certain taux d'humidité grâce au liquide pompé hors du bac de fond (2) à l'aide d'une pompe (19) puis dirigé à travers un conduit (20) vers un dispositif de pulvérisation ou d'arrosage (21) ou grâce à une alimentation en eau fraîche.

10. Dispositif d'après les revendications 1 à 6,
**caractérisé en cela que**
des ventilateurs (16) sont disposés au dessus du compartiment de neutralisation (26) de manière à maintenir le tirage nécessaire de l'extraction des gaz de fumée (22) aussi constant que possible.
